# FASCICULE DE BREVET EUROPEEN

(11) **EP 3 983 288 B1**
(45) Date de publication et mention de la délivrance du brevet: **20.12.2023**
(21) Numéro de dépôt: 20733528.2
(22) Date de dépôt: 12.06.2020
(51) Int. Cl.: B64C 1/14, E05D 7/04, E05D 3/06

(54) **PORTE D'AÉRONEF AVEC CHARNIÈRES DE BRAS DE SUPPORT AJUSTABLES**
FLUGZEUGTÜR MIT VERSTELLBAREN STÜTZARMSCHARNIEREN
AIRCRAFT DOOR WITH ADJUSTABLE SUPPORT ARM HINGES

(30) Priorité: 15.06.2019 FR 1906435
(43) Date de publication de la demande: 20.04.2022
(73) Titulaire: Latecoere, 31500 Toulouse (FR)
(72) Inventeur: CAPRON, Nicolas, 31240 Castanet Tolosan (FR); DUBOSC, Grégory, 82170 Grisolles (FR); SALLES, Jean Batiste, 81370 Saint Sulpice (FR)
(74) Mandataire: Junca, Eric
(86) Numéro de dépôt international: PCT/EP2020/025276
(87) Numéro de publication internationale: WO 2020/253987

(56) Documents cités:
- EP-A1- 1 227 034
- EP-A1- 2 325 425
- DE-A1- 19 730 918

## Description

### DOMAINE TECHNIQUE

L'invention concerne le domaine de l'aéronautique et concerne plus particulièrement une porte d'aéronef munie de moyens permettant le réglage notamment de la position de l'ouvrant de la porte par rapport au fuselage de l'aéronef lorsque la porte est en position de fermeture.

### ART ANTÉRIEUR

Les portes d'aéronef connues comportent généralement :
- un ouvrant comprenant une structure de porte sur laquelle est fixée une paroi externe ;
- un dormant comprenant un cadre de porte destiné à être fixé sur le fuselage de l'aéronef ;
- un bras de support de l'ouvrant comportant une extrémité montée pivotante sur le cadre de porte, ce bras de support étant mobile entre une position de fermeture dans laquelle l'ouvrant obture le cadre de porte et une position d'ouverture dans laquelle l'ouvrant est dégagé du cadre de porte.

Il est connu du document de brevet EP 1 227 034 une telle porte d'aéronef dans laquelle le bras de support est relié au cadre de porte par deux charnières comportant chacune un pivot de rotation du bras de support autour d'un axe de pivotement, et est relié à un avant-bras par une première liaison pivot, l'avant-bras étant relié à l'ouvrant par une deuxième liaison pivot. Ces liaisons pivot n'autorisent qu'une rotation autour d'axes de pivotement parallèles à l'axe de pivotement des pivots de rotation du bras de support. Cependant, la position de l'ouvrant par rapport au dormant n'est pas rendue ajustable dans cette solution.

Par ailleurs, les portes sont généralement munies de moyens permettant de régler la position de l'ouvrant par rapport au dormant, par exemple afin d'aligner au mieux la paroi externe de l'ouvrant avec le fuselage de l'aéronef. Ces moyens sont généralement constitués par des fixations autorisant des jeux de réglage entre les différents éléments de la porte d'aéronef. Les différentes fixations présentes sur le dormant, sur l'ouvrant, et sur le bras de support, peuvent ainsi être desserrées pour déplacer le bras de support et l'ouvrant à la position adéquate. Ces fixations sont ensuite resserrées pour verrouiller cette position.

Ces opérations de réglage nécessaires aux portes d'aéronef de l'art antérieur sont longues et fastidieuses, et nécessitent la participation de plusieurs opérateurs dont certains sont en charge de maintenir les éléments de la porte pendant que d'autres serrent et desserrent les fixations. De plus, l'ajustement optimal de ces portes d'aéronef nécessite plusieurs itérations de réglage car le mouvement de chaque fixation influe sur le réglage des autres fixations. Ces portes d'aéronef comportent également un nombre important de pièces permettant leur réglage.

### EXPOSÉ DE L'INVENTION

L'invention a pour but d'améliorer les portes d'aéronef de l'art antérieur en ce qui concerne leur capacité de réglage et d'ajustement dans un aéronef.

A cet effet, l'invention vise une porte d'aéronef comportant :
- un ouvrant comprenant une structure de porte sur laquelle est fixée une paroi externe ;
- un dormant comprenant un cadre de porte destiné à être fixé sur le fuselage de l'aéronef ;
- un bras de support de l'ouvrant comportant une extrémité montée pivotante sur le cadre de porte, ce bras de support étant mobile entre une position de fermeture dans laquelle l'ouvrant obture le cadre de porte et une position d'ouverture dans laquelle l'ouvrant est dégagé du cadre de porte.

Dans cette porte d'aéronef :
- le bras de support est relié à un avant-bras de support par une première liaison pivot autorisant comme seul degré de liberté une rotation entre l'avant-bras de support et le bras de support autour d'un premier axe de pivotement, l'avant-bras de support étant relié à l'ouvrant par une deuxième liaison pivot autorisant comme seul degré de liberté une rotation entre l'ouvrant et l'avant-bras de support autour d'un deuxième axe de pivotement parallèle au premier axe de pivotement ;
- le bras de support est relié au cadre de porte par deux charnières comportant chacune un pivot de rotation du bras de support autour d'un troisième axe de pivotement qui est parallèle au premier axe de pivotement et au deuxième axe de pivotement, ce pivot de chaque charnière étant relié au cadre de porte par une attache ajustable en translation selon une direction de première translation et selon une direction de deuxième translation, ces deux directions étant orthogonales entre elles et orthogonales au troisième axe de pivotement. Du plus, ces pivots de rotation du bras de support sont ajustables en translation le long du troisième axe de pivotement.

Une telle porte d'aéronef comporte peu de pièces destinées à son réglage, ce qui diminue le cout de cette porte et la masse embarquée dans l'aéronef.

Les charnières de la porte d'aéronef selon l'invention centralisent au niveau des deux attaches ajustables tous les réglages permis à la porte d'aéronef. Un seul opérateur est nécessaire pour agir sur les deux attaches ajustables dans une zone facilement accessible de la liaison entre le bras de support et le cadre de porte. Cette action sur les attaches ajustables permet le réglage de l'ouvrant et du bras de support en même temps.

L'invention permet ainsi, en plus de l'allègement et de la baisse du cout de la porte d'aéronef, un réglage plus rapide, plus précis et simplifié par rapport aux portes d'aéronef de l'art antérieur.

Le terme « ajustable » est ici défini comme la propriété d'un élément de réglage de pouvoir entraîner en translation ou en rotation l'ouvrant de la porte d'aéronef uniquement lors du montage de la porte dans l'aéronef ou de phases de maintenance. En dehors de ces cas, ces éléments de réglage sont bloqués et la porte d'aéronef ne comporte que des liaisons pivot simple permettant l'actionnement de l'ouvrant par rapport au dormant.

La porte d'aéronef selon l'invention peut comporter les caractéristiques additionnelles suivantes, seules ou en combinaison :
- les deux charnières sont alignées sur le bras de support de sorte que les pivots de rotation du bras de support sont alignés le long du troisième axe de pivotement ;
- le pivot de rotation du bras de support de l'une des charnières comporte un arbre de coulissement avec lequel le bras de support est en liaison pivot glissant ; et le pivot de rotation du bras de support de l'autre charnière est relié au bras de support par une liaison hélicoïdale débrayable d'ajustement ;
- ledit pivot de rotation du bras de support de l'autre charnière comporte : un arbre central monté sur l'attache ajustable et s'étendant le long du troisième axe de pivotement ; un cylindre fileté monté rotatif sur l'arbre central ; un manchon taraudé vissé sur le cylindre fileté et fixé au bras de support ;
- le cylindre fileté est arrêté en rotation par une bride amovible venant en butée contre le bras de support ;
- les charnières comportent chacune un socle fixé sur le cadre de porte, l'attache ajustable de chaque charnière étant montée dans le socle correspondant ;
- l'attache ajustable de chaque charnière traverse une paroi du cadre de porte ;
- l'attache ajustable de chaque charnière comporte un sabot monté dans le socle et une chape reliant le sabot au pivot de rotation du bras de support ;
- la chape de chaque charnière est ajustable en translation par rapport au sabot, selon une direction de première translation qui est orthogonale et sécante au troisième axe de pivotement ;
- la chape de chaque charnière est en liaison hélicoïdale avec le sabot ;
- la chape de chaque charnière comporte : une portion filetée tournante montée dans un alésage taraudé du sabot ; et une tête d'actionnement accessible depuis le socle ;
- le sabot de chaque charnière est ajustable en translation selon une direction de deuxième translation qui est orthogonale au troisième axe de pivotement et à la direction de première translation ;
- le sabot est monté sur le socle par l'intermédiaire : d'un arbre de guidage s'étendant parallèlement à la direction de deuxième translation ; d'une vis d'ajustement, s'étendant parallèlement à la direction de deuxième translation, qui est en liaison pivot avec le socle et qui est en liaison hélicoïdale avec le sabot ;
- la porte comprend une bielle de pivotement et une avant-bielle de pivotement reliées entre elles par une liaison pivot, et l'attache ajustable de l'une des charnières comporte un pivot pour la bielle de pivotement ;
- la porte comprend un mécanisme d'ouverture par échappement latéral, toutes les pièces reliant l'ouvrant au cadre de porte étant articulées uniquement par des liaisons pivot selon des axes parallèles au premier axe de pivotement.

### PRÉSENTATION DES FIGURES

D'autres caractéristiques et avantages de l'invention ressortiront de la description non limitative qui suit, en référence aux dessins annexés dans lesquels :
[Fig.1] La figure 1 est une représentation schématique d'une porte d'aéronef en position de fermeture ;
[Fig.2] La figure 2 est une représentation schématique d'une porte d'aéronef dans une position intermédiaire ;
[Fig.3] La figure 3 est une représentation schématique d'une porte d'aéronef en position d'ouverture ;
[Fig.4] La figure 4 est une vue générale d'une porte d'aéronef selon l'invention ;
[Fig.5] La figure 5 est une vue agrandie de l'encadré V de la figure 4 ;
[Fig.6] La figure 6 est une vue agrandie de l'encadré VI de la figure 4 ;
[Fig.7] La figure 7 est une vue en perspective des charnières de la porte d'aéronef de la figure 4 vue depuis l'extérieur de l'aéronef ;
[Fig.8] La figure 8 représente des éléments de la charnière supérieure de la porte d'aéronef de la figure 4 ;
[Fig.9] La figure 9 représente des éléments de la charnière inférieure de la porte d'aéronef de la figure 4 ;
[Fig.10] La figure 10 est une vue agrandie de l'encadré X de la figure 7 ;
[Fig.11] La figure 11 est une vue en coupe partielle de la charnière inférieure représentée à la figure 9.

### DESCRIPTION DÉTAILLÉE

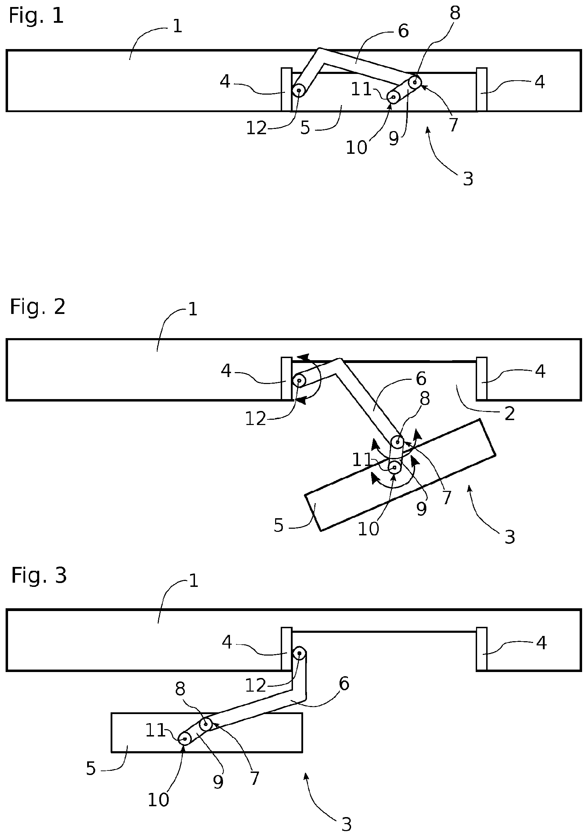

Les figures 1 à 3 illustrent schématiquement une porte d'aéronef 3 selon l'invention. Sur ces schémas de principe, l'aéronef est vu de dessus et une portion de son fuselage 1 a été représenté autour de la porte d'aéronef 3. Le fuselage 1 comporte une ouverture 2 dans laquelle est montée la porte d'aéronef 3.

Les figures 1 à 3 illustrent uniquement les liaisons mécaniques et les mouvements possibles entre certaines pièces et n'illustrent pas le fonctionnement cinématique général de la porte 3 dans ses fonctions d'ouverture et de fermeture.

La porte d'aéronef 3 comprend un dormant constitué ici par un cadre de porte 4 fixé sur le fuselage 1 de l'aéronef. La porte 3 comprend également un ouvrant 5 qui est relié au cadre de porte 4 par un bras de support 6 et un avant-bras de support 9.

L'ouvrant 5, le bras de support 6, et l'avant-bras de support 9 sont mobiles entre :
- une position de fermeture, représentée à la figure 1, dans laquelle l'ouvrant 5 obture le cadre 4 pour permettre notamment le vol de l'aéronef ;
- une position d'ouverture, représentée à la figure 3, dans laquelle l'ouvrant 5 est dégagé du cadre 4 pour permettre l'accès à l'intérieur de l'aéronef, pour constituer une issue de secours, ou toute autre fonction d'une porte d'aéronef.

La figure 2 représente une étape intermédiaire entre la position de fermeture de la figure 1 et la position d'ouverture de la figure 3. La figure 2 illustre les mouvements mutuels possibles de l'ouvrant 5, du bras de support 6, et de l'avant-bras de support 9.

Le bras de support 6 est relié à l'avant-bras 9 par une liaison pivot 7 autorisant comme seul degré de liberté une rotation entre le bras de support 6 et l'avant-bras de support 9 autour d'un premier axe de pivotement 8.

L'avant-bras de support 9 est relié à l'ouvrant 5 par une liaison pivot 10 autorisant comme seul degré de liberté une rotation entre l'ouvrant 5 et l'avant-bras de support 9 autour d'un deuxième axe de pivotement 11.

La figure 2 illustre par des flèches les rotations qui sont les seuls mouvements mutuels possibles pour le bras de support 6, l'avant-bras de support 9, et l'ouvrant 5.

Les mouvements permis à l'ouvrant 5 et illustrés à la figure 2 permettent à l'ouvrant 5 de se dégager des butées de verrouillage présentes sur le cadre 4. La porte d'aéronef 3 est ainsi avantageusement une porte dite « à échappement latéral » pour laquelle l'ouverture est réalisée en pivotant l'ouvrant selon un axe sensiblement vertical et en le translatant latéralement (c'est à dire dans la direction longitudinale de l'aéronef). Une telle porte d'aéronef 3 à échappement latéral peut être par exemple une porte d'aéronef telle que décrite dans la demande de brevet déposée en France le 10 octobre 2018 sous le numéro FR1859376.

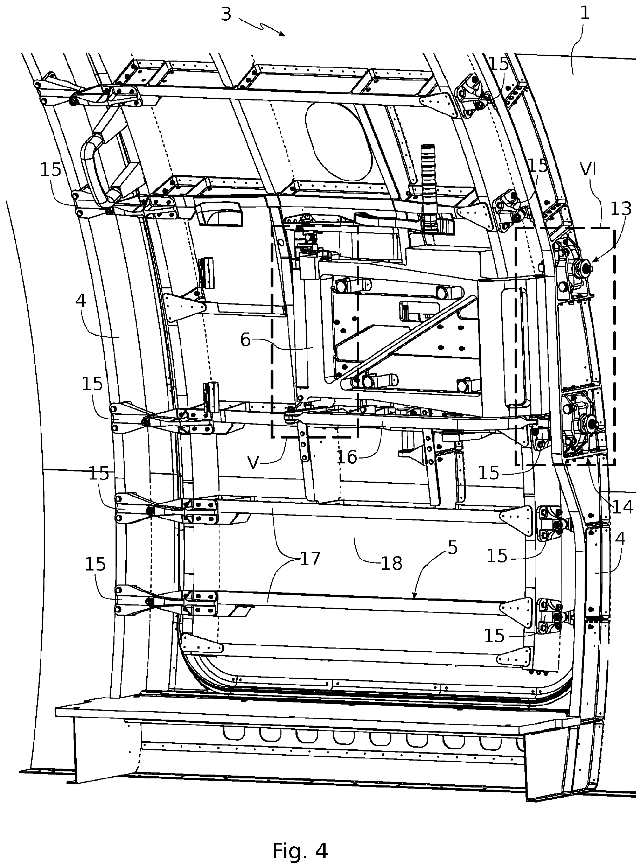

La figure 4 est une vue d'ensemble de la porte d'aéronef 3 selon l'invention, vue depuis l'intérieur de l'aéronef. Sur cette figure, le fuselage 1 de l'aéronef est visible autour de la porte 3, le cadre de porte 4 étant fixé sur ce fuselage 1.

L'ouvrant 5 est constitué d'une structure de porte 17, formée de manière classique par des longerons et des poutres rigides, sur laquelle est fixée une paroi externe 18 couramment dénommée « peau ». Cette paroi externe 18 est destinée à être positionnée dans l'alignement du fuselage 1 de l'aéronef lorsque la porte 3 est en position de fermeture. La paroi externe 18 constitue avec le fuselage 1 la délimitation externe de l'aéronef.

Le bras de support 6 est relié au cadre 4 par des charnières 13, 14 permettant la rotation du bras de support 6 par rapport au cadre 4 autour d'un troisième axe de pivotement 12 qui est parallèle au premier axe de pivotement 8 et au deuxième axe de pivotement 11 (le troisième axe de pivotement 12 est illustré notamment aux figures 1 à 3).

La figure 4 représente la porte d'aéronef 3 en position de fermeture et verrouillée par ses butées 15. Les mouvements de rotation du bras de support 6, de l'avant-bras de support 9, et de l'ouvrant 5, autour des axes 8, 11, 12 permettent à l'ouvrant d'échapper latéralement des butées 15 lors de l'ouverture de la porte d'aéronef. Aucun mouvement vertical de l'ouvrant 5 n'est permis par la cinématique décrite ici en exemple.

Le bras de support 6 est ici formé d'une structure rigide et dimensionné pour supporter le poids de l'ouvrant 5. Les charnières supérieure 13 ou inférieure 14 supportent le poids de l'ensemble et sont ajustables.

La porte d'aéronef 3 comporte ici de plus une bielle de pivotement 16 reliant l'une des charnières (la charnière inférieure 14 sur l'exemple de la figure 4) à une avant-bielle de pivotement 19 elle-même reliée à la structure de porte 17 de l'ouvrant 5. La bielle de pivotement 16 et avant-bielle de pivotement 19 permettent d'orienter la rotation de l'ouvrant 5 par rapport au cadre 4 durant les manoeuvres d'ouverture et de fermeture.

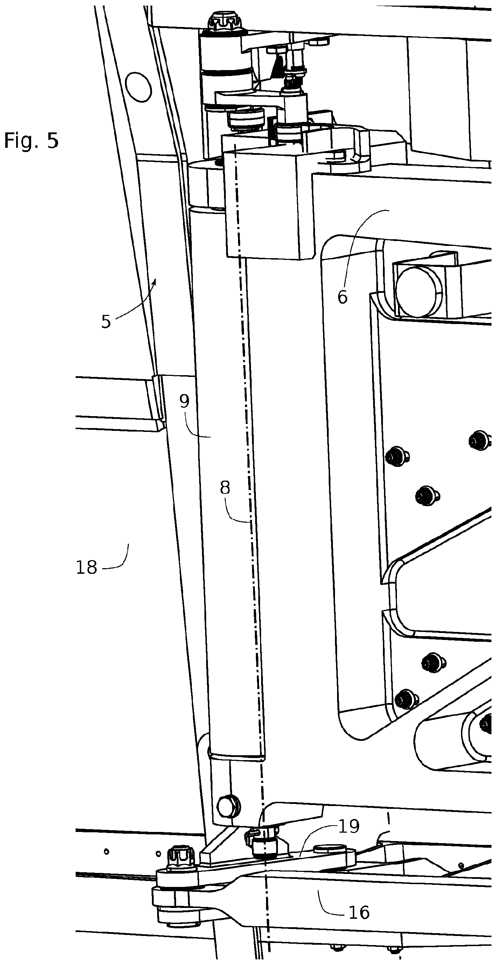

La figure 5 est une vue agrandie de l'encadré V de la figure 4 et montre notamment la liaison entre le bras de support 6 et l'avant-bras de support 9 le long du premier axe de pivotement 8. Cette liaison pivot est ici constituée par une articulation cylindrique de type à guidage long garantissant que seule la rotation autour du premier axe de pivotement 8 est permise entre le bras de support 6 et l'avant-bras de support 9. Une liaison pivot du même type est prévue entre l'avant-bras de support 9 et la structure de porte 17.

Des liaisons pivots sont prévues d'une part entre la bielle de pivotement 16 et l'avant-bielle de pivotement 19, et d'autre part entre l'avant-bielle de pivotement 19 et la structure de porte 17. Ces liaisons pivot sont destinées à guider l'orientation de l'ouvrant 5 dans son mouvement et non à supporter le poids de l'ouvrant 5. Ces liaisons pivot sont constituées de liaisons pivot classiques, éventuellement de rotules.

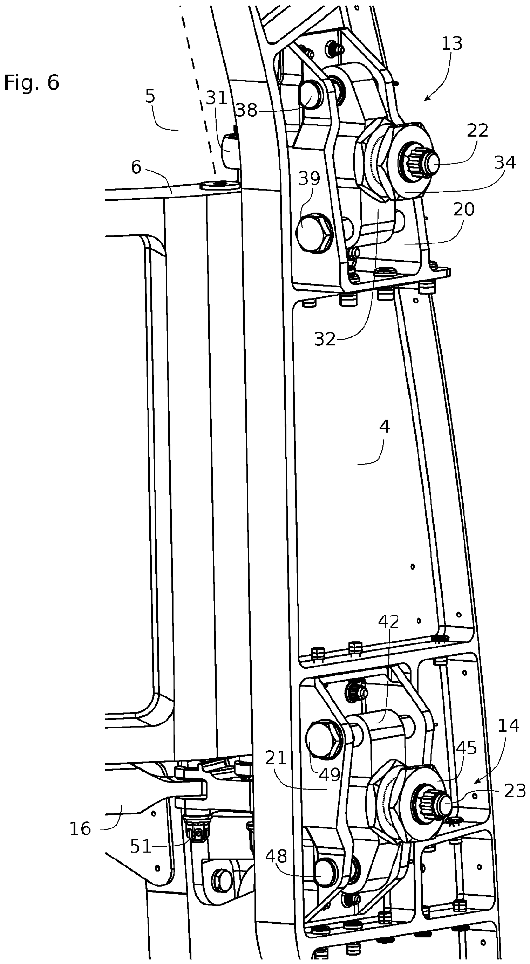

La figure 6 est une vue agrandie du cadre VI de la figure 4 et montre notamment les charnières 13, 14 reliant le bras de support 6 et la bielle de pivotement 16 au cadre 4.

Les charnières 13, 14 comportent chacune un socle 20, 21 fixé, par exemple par boulonnage, sur le cadre 4 ou intégré directement dans le cadre 4. Pour chacune des charnières 13, 14, une attache ajustable 22, 23 est montée dans le socle 20, 21.

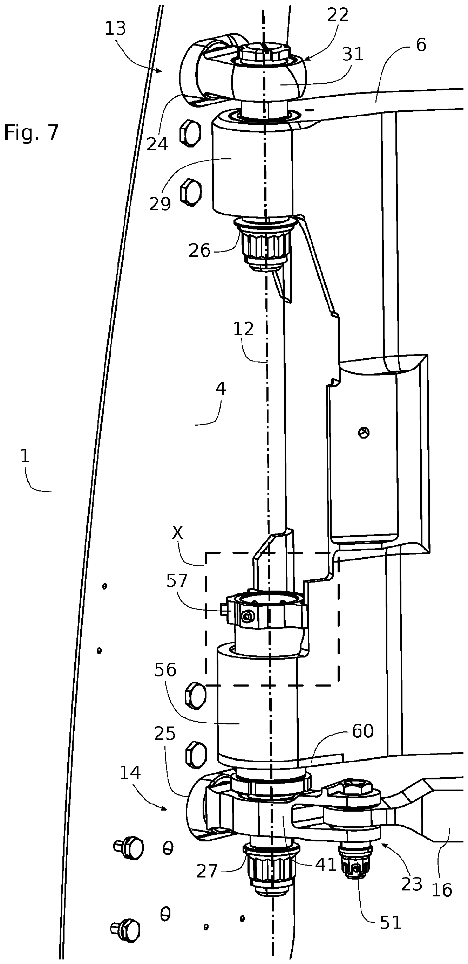

La figure 7 représente les éléments de la figure 6 sous un autre angle, vus depuis l'extérieur de l'aéronef. Les attaches 22, 23 traversent une paroi du cadre 4 via des orifices traversants 24, 25 pour relier chaque socle 20, 21 à un pivot 26, 27 de rotation du bras de support 6, ce pivot 26, 27 étant rattaché au bras de support 6 et permettant la rotation du bras de support 6 autour du troisième axe de pivotement 12.

Dans le présent exemple, les charnières 13, 14 sont alignées le long d'un axe parallèle au premier axe de pivotement 8, de sorte que le pivot supérieur 26 et le pivot inférieur 27 soient alignés suivant le troisième axe de pivotement 12. Dans la présente description, la charnière 13 du dessus est dite charnière supérieure 13 et la charnière du dessous est dite inférieure 14. De même les différents éléments constituants les charnières 13, 14 seront qualifiés de supérieur ou inférieur en fonction de leur appartenance à l'une ou l'autre charnière 13, 14.

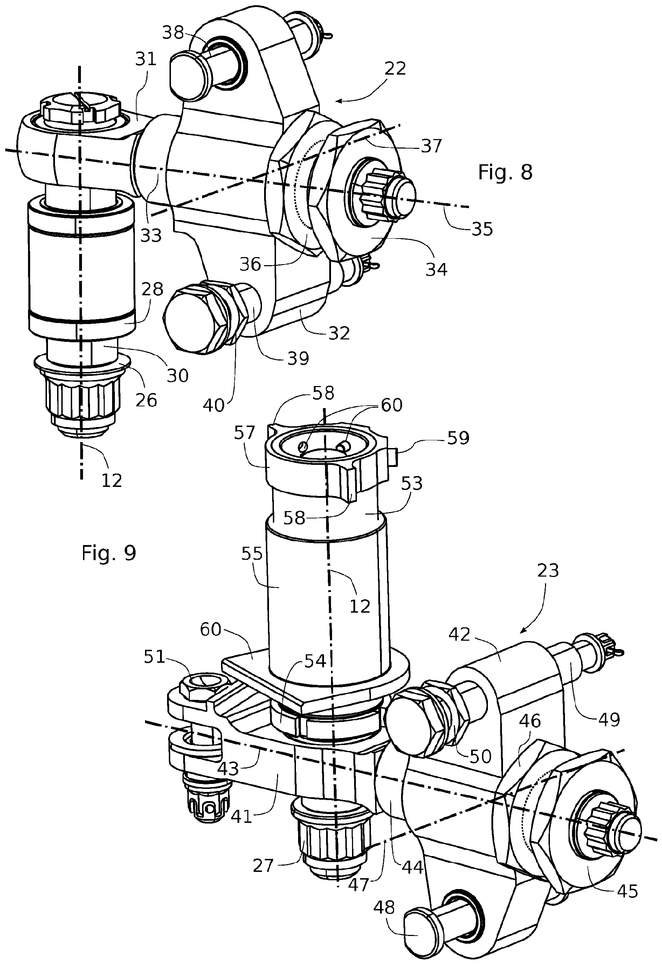

La figure 8 représente en perspective l'ensemble formé par le pivot supérieur 26 et l'attache supérieure 22, de la charnière supérieure 13.

Le pivot supérieur 26 comporte un ou plusieurs roulements 28, montés serrés dans un palier supérieur 29 du bras de support 6. Ces roulements 28 sont en liaison pivot glissant avec un arbre de coulissement 30 qui s'étend suivant le troisième axe de pivotement 12.

Pour la liaison du pivot supérieur 26 au socle supérieur 20, l'attache supérieure 22 comporte une chape 31 montée sur un sabot 32. La chape 31 est fixée sur le pivot supérieur 26 et comporte une portion tournante filetée 33 qui est munie à son extrémité d'une tête hexagonale 34. La portion tournante filetée 33 et la tête hexagonale 34 sont solidaires l'une de l'autre et sont mobiles en rotation, autour d'une direction de première translation 35, par rapport au reste de la chape supérieure 31. Cette portion tournante filetée 33 est en liaison hélicoïdale avec le sabot 32 qui comporte à cet effet un alésage taraudé traversant. Ainsi, lorsque la tête hexagonale 34 est tournée dans un sens ou dans l'autre, la portion tournante filetée 33 est entraînée en rotation autour de la direction de première translation 35 ce qui entraine un déplacement de la chape supérieure 31 en translation le long de cet axe 35. Un contre-écrou 36 est de plus prévu sur la portion tournante filetée 33 pour bloquer, lorsque le contre-écrou 36 est serré contre le sabot 32, et maintenir en position la chape 31 dans le sabot 32.

Le sabot supérieur 32 est par ailleurs ajustable en translation selon une direction de deuxième translation 37 qui est orthogonale à la direction de première translation 35. Ce montage est réalisé grâce à un arbre de guidage 38 parallèle à cette direction de deuxième translation 37 et fixé sur le socle supérieur 20, le sabot supérieur 32 étant monté avec un ajustement glissant sur cet arbre de guidage 38. Une vis d'ajustement 39 complète l'action de l'arbre de guidage 38 pour le maintien du sabot supérieur 32 dans le socle supérieur 20. La vis d'ajustement 39 est montée tournante dans le socle supérieur 20 mais immobilisée en translation. Le sabot supérieur 32 est en liaison hélicoïdale avec la vis d'ajustement 39 grâce à un alésage traversant taraudé du sabot supérieur. La rotation de la vis 39 entraine ainsi la translation selon la direction de deuxième translation 37 du sabot 32 par rapport au socle 20. Un contre-écrou 40 permet de plus d'immobiliser la vis d'ajustement 39.

La charnière supérieure 13 peut ainsi être ajustée en translation :
- le long de la direction de première translation 35 en agissant sur la tête hexagonale 34 ;
- le long de la direction de deuxième translation 37 en agissant sur la vis d'ajustement 39.

La figure 9 représente en perspective l'ensemble formé par le pivot inférieur 27 et l'attache inférieure 23, de la charnière inférieure 14.

La charnière inférieure 14 présente une constitution en partie similaire à la charnière supérieure 13. La charnière inférieure 14 comporte ainsi un pivot inférieur 27 monté sur une chape inférieure 41 de sorte que ce pivot 27 soit aligné avec le troisième axe de pivotement 12. La chape inférieure 41 est ajustable en translation par rapport à un sabot inférieur 42, selon une direction de première translation 43 grâce à une portion tournante filetée 44 qui peut être actionnée en rotation grâce à une tête hexagonale 45. La portion tournante filetée 44 peut être bloquée par un contre-écrou 46.

Le sabot inférieur 42 est également ajustable en translation selon une direction de deuxième translation 47, orthogonale à la direction de première translation 43, grâce à un arbre de guidage 48 sur lequel le sabot inférieur 42 est monté par un ajustement glissant, et grâce à une vis d'ajustement 49 montée tournante sur le socle inférieur 21 et qui est en liaison hélicoïdale avec le socle inférieur 21. Un contre-écrou 50 est également prévu pour bloquer le sabot inférieur 42 en position le long de cette direction de deuxième translation 47.

La charnière inférieure 14 peut ainsi être ajustée en translation :
- le long de la direction de première translation 43 en agissant sur la tête hexagonale 45 ;
- le long de la direction de deuxième translation 47 en agissant sur la vis d'ajustement 49.

La chape inférieure 41 de cette charnière inférieure 14 comporte de plus un pivot 51 destiné au montage de la bielle de pivotement 16. L'ajustement de la charnière 14 agit ainsi directement sur le bras de support 6 et sur la bielle de pivotement 16. Compte tenu des liaisons pivot simple relatives à l'avant-bras de support 9, l'avant-bielle de pivotement 19 et l'ouvrant 5, l'ajustement de la charnière 14 agit donc sur le positionnement du bras de support 6, de l'avant-bras de support 9, de la bielle de pivotement 16, de l'avant-bielle de pivotement 19, et de l'ouvrant 5.

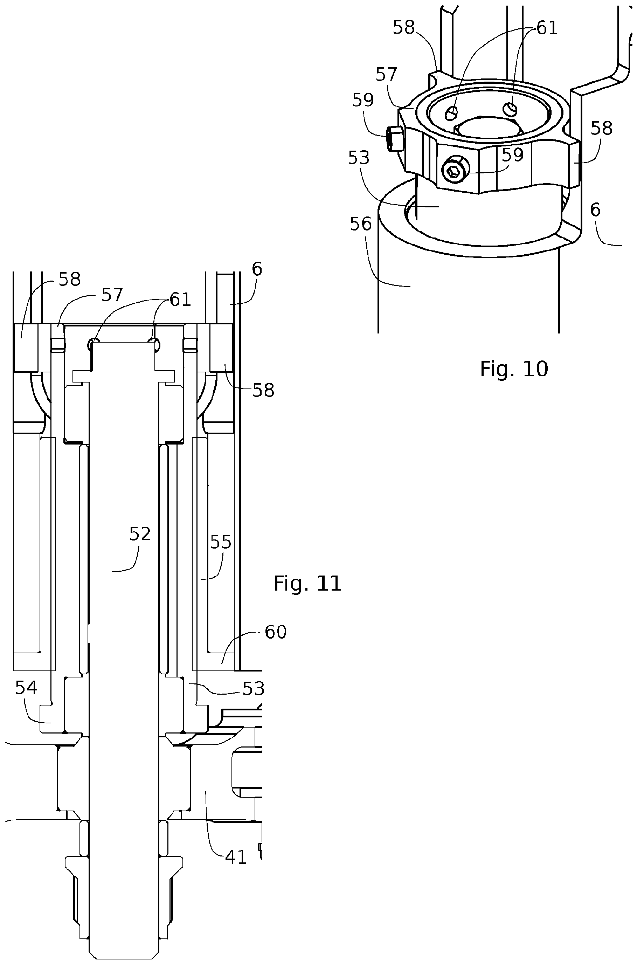

Le pivot inférieur 27 comporte de plus des moyens d'ajustement de la position du bras de support 6 le long du troisième axe de pivotement 12. Ces moyens d'ajustement sont illustrés plus en détail à la figure 10, qui est une vue agrandie de l'encadré X de la figure 7, et de la figure 11 qui est une coupe du pivot inférieur 27.

Le pivot inférieur 27 comporte un arbre central 52 sur lequel est monté rotatif un cylindre fileté 53 grâce à un montage de roulement ou de bagues. Ce cylindre fileté 53 comporte une couronne 54 permettant de provoquer la rotation du cylindre fileté 53 sur l'arbre central 52 grâce à une clé à ergot. Un manchon taraudé 55 est vissé sur le cylindre fileté 53. Le manchon taraudé 55 est par ailleurs fixé sur le bras de support 6, au niveau d'un palier inférieur 56. Un plateau de support 60 solidaire du manchon taraudé 55 permet la reprise d'efforts liés au poids du bras de support 6 vers le pivot 27.

La position du bras de support 6 en translation le long du troisième axe de pivotement 12 peut être ainsi être ajustée en actionnant en rotation la couronne 54 pour entraîner le manchon taraudé 55 à monter ou descendre le long du cylindre fileté 53.

Le pivot inférieur 27 comporte de plus une bride 57 permettant l'arrêt en rotation du cylindre fileté 53 par rapport au manchon taraudé 55 (voir figure 10 et 11). La bride 57 comporte deux ergots 58 d'arrêt en rotation contre le bras de support 6. La bride 57 comporte des moyens d'arrêt en rotation sur le cylindre fileté 53 tels que, par exemple, des vis 59 coopérant avec des orifices 61 pratiqués dans le cylindre fileté 53. Grâce à la bride 57, le pivot inférieur 27 comporte une liaison hélicoïdale débrayable avec le bras de support 6.

Pour ajuster la position en hauteur, le long du troisième axe de pivotement 12, du bras de support 6, la bride 57 est extraite, puis l'ajustement est réalisé par action sur la couronne 54. Une fois la hauteur correcte pour le bras de support 6 ajustée sur le pivot 27, cet ajustement est bloqué en remettant en place la bride 57 qui verrouille l'ajustement.

Lors du montage de la porte d'aéronef 3, les différents éléments de la porte sont montés sur le cadre 4 puis la porte est ajustée de sorte que, en position fermée, la paroi externe 18 soit parfaitement dans l'alignement du fuselage 1 de l'aéronef et que les joints d'étanchéité soient régulièrement comprimés pour garantir l'étanchéité de la porte d'aéronef. Ce réglage est réalisé avec les mouvement d'ajustement suivants :
- la translation le long du troisième axe de pivotement 12 de l'ensemble formé par le bras de support 6, l'avant-bras de support 9, et l'ouvrant 5 ; en agissant sur la couronne 54 ; ce mouvement d'ajustement règle ici la hauteur de l'ouvrant 5 par rapport au fuselage ;
- la translation le long d'une direction parallèle à l'axe longitudinal de l'aéronef de l'ensemble formé par le bras de support 6, l'avant-bras de support 9, la bielle de pivotement 16, l'avant-bielle de pivotement 19, et l'ouvrant 5 ; en agissant de manière identique sur la tête hexagonale supérieure 34 et inférieure 45, c'est-à-dire en déplaçant la chape supérieure 31 et la chape inférieure 41 de la même distance le long de leur direction de première translation 35, 43 ; ce mouvement d'ajustement règle ici la position latérale de l'ouvrant 5 par rapport au fuselage ;

- la translation le long d'une direction transversale à l'aéronef de l'ensemble formé par le bras de support 6, l'avant-bras de support 9, la bielle de pivotement 16, l'avant-bielle de pivotement 19, et l'ouvrant 5 ; en agissant de manière identique sur la vis d'ajustement supérieure 39 et la vis d'ajustement inférieure 49, c'est-à-dire en déplaçant le sabot supérieur 32 et le sabot inférieur 42 d'une même distance le long de leur direction de deuxième translation 37, 47 ; ce mouvement d'ajustement règle ici l'enfoncement de l'ouvrant 5 par rapport au fuselage ;
- la rotation autour d'un axe parallèle à l'axe longitudinal de l'aéronef en actionnant en rotation uniquement la vis d'ajustement supérieure 39 ou la vis d'ajustement inférieure 49, ou en actionnant en rotation ces vis 39, 49 dans des sens opposés ; ce mouvement d'ajustement règle ici l'ouvrant 5 par rapport au fuselage, en rotation autour d'un axe horizontal et parallèle à l'ouvrant 5 ;
- la rotation autour d'un axe transversal à l'aéronef de l'ensemble formé par le bras de support 6, l'avant-bras de support 9, la bielle de pivotement 16, l'avant-bielle de pivotement 19, et l'ouvrant 5 ; en agissant sur une seule des deux têtes hexagonales 34, 45, ou en les actionnant en sens inverse l'une de l'autre ; ce mouvement d'ajustement règle ici l'ouvrant 5 par rapport au fuselage, en rotation autour d'un axe horizontal et orthogonal à la paroi externe de l'ouvrant 5.

Les charnières 13, 14 permettent ainsi à elles seules l'ajustement de l'ouvrant 5 selon cinq des six degrés de liberté possibles. La rotation de l'ouvrant 5 autour d'un axe vertical (le sixième degré de liberté qui n'est pas ajustable par les charnières 13, 14) ne nécessite pas d'ajustement car la manoeuvre de la porte se déroule par rotation autour du premier axe de pivotement 8, du deuxième axe de pivotement 11, et du troisième axe de pivotement 12.

L'ajustement de la porte d'aéronef peut ainsi être réalisé selon trois directions de translation et selon deux axes de rotations en agissant uniquement sur la charnière supérieure 13 et la charnière inférieure 14. Cet ajustement agit à la fois sur le bras de support 6 et sur l'ouvrant 5. Pour ce qui est de la charnière inférieure 14, le déplacement de la chape inférieure 41 entraine également le déplacement du pivot 51 et donc de la bielle de pivotement 16. Cet ajustement est rapide et facilement réalisable par une seule personne.

Des variantes de réalisation de la porte d'aéronef peuvent être envisagées sans sortir du cadre de l'invention définie par les revendications. Par exemple, des moyens d'ajustement le long des directions des première et deuxième translations peuvent être différents de ceux décrits ici, ils peuvent par exemple comporter des rails de guidage et des coulisseaux associés à des moyens de blocage.

## Revendications

1. Porte d'aéronef comportant :
- un ouvrant (5) comprenant une structure de porte (17) sur laquelle est fixée une paroi externe (18) ;
- un dormant comprenant un cadre de porte (4) destiné à être fixé sur le fuselage (1) de l'aéronef ;
- un bras de support (6) de l'ouvrant (5) comportant une extrémité montée pivotante sur le cadre de porte (4), ce bras de support (6) étant mobile entre une position de fermeture dans laquelle l'ouvrant (5) obture le cadre de porte (4) et une position d'ouverture dans laquelle l'ouvrant (5) est dégagé du cadre de porte (4) ;
- le bras de support (6) est relié à un avant-bras de support (9) par une première liaison pivot (7) autorisant comme seul degré de liberté une rotation entre l'avant-bras de support (9) et le bras de support (6) autour d'un premier axe de pivotement (8), l'avant-bras de support (9) étant relié à l'ouvrant (5) par une deuxième liaison pivot (10) autorisant comme seul degré de liberté une rotation entre l'ouvrant (5) et l'avant-bras de support (9) autour d'un deuxième axe de pivotement (11) parallèle au premier axe de pivotement (8) ;
- le bras de support (6) est relié au cadre de porte (4) par deux charnières (13,14) comportant chacune un pivot (26,27) de rotation du bras de support (6) autour d'un troisième axe de pivotement (12) qui est parallèle au premier axe de pivotement (8) et au deuxième axe de pivotement (11) ;
cette porte d'aéronef étant **caractérisée en ce que** :
ce pivot (26,27) de chaque charnière est relié au cadre de porte (4) par une attache (22,23) ajustable en translation selon une direction de première translation (35, 43) et selon une direction de deuxième translation (37, 47), ces deux directions (35,37,43,47) étant orthogonales entre elles et orthogonales au troisième axe de pivotement (12) ; et **en ce que** les pivots de rotation (26,27) du bras de support (6) sont ajustables en translation le long du troisième axe de pivotement (12).

2. Porte d'aéronef selon la revendication 1, **caractérisée en ce que** les deux charnières (13,14) sont alignées sur le bras de support (6) de sorte que les pivots de rotation (26,27) du bras de support (6) sont alignés le long du troisième axe de pivotement (12).

3. Porte d'aéronef selon l'une des revendications 1 ou 2, **caractérisée en ce que** : le pivot de rotation (26) du bras de support (6) de l'une (13) des charnières comporte un arbre de coulissement (30) avec lequel le bras de support (6) est en liaison pivot glissant ; et **en ce que** le pivot de rotation (27) du bras de support (6) de l'autre charnière (14) est relié au bras de support (6) par une liaison hélicoïdale débrayable d'ajustement.

4. Porte d'aéronef selon la revendication 3, **caractérisée en ce que** ledit pivot de rotation (27) du bras de support (6) de l'autre charnière (14) comporte : un arbre central (52) monté sur l'attache ajustable (23) et s'étendant le long du troisième axe de pivotement (12) ; un cylindre fileté (53) monté rotatif sur l'arbre central (52) ; un manchon taraudé (55) vissé sur le cylindre fileté (53) et fixé au bras de support (6).

5. Porte d'aéronef selon la revendication 4, **caractérisée en ce que** le cylindre fileté (53) est arrêté en rotation par une bride amovible (57) venant en butée contre le bras de support (6).

6. Porte d'aéronef selon l'une quelconque des revendications précédentes, **caractérisée en ce que** les charnières (13,14) comportent chacune un socle (20,21) fixé sur le cadre de porte (4), l'attache ajustable (22,23) de chaque charnière (13,14) étant montée dans le socle (20,21) correspondant.

7. Porte d'aéronef selon l'une quelconque des revendications précédentes, **caractérisée en ce que** l'attache ajustable (22,23) de chaque charnière (13,14) traverse une paroi du cadre de porte (4).

8. Porte d'aéronef selon l'une des revendications 6 ou 7, **caractérisée en ce que** l'attache ajustable (22,23) de chaque charnière (13,14) comporte un sabot (32,42) monté dans le socle (20,21) et une chape (31,41) reliant le sabot (32,42) au pivot de rotation (26,27) du bras de support (6).

9. Porte d'aéronef selon la revendication 8, **caractérisée en ce que** la chape (31,41) de chaque charnière (13,14) est ajustable en translation par rapport au sabot (32,42), selon une direction de première translation (35,43) qui est orthogonale et sécante au troisième axe de pivotement (12).

10. Porte d'aéronef selon la revendication 8, **caractérisée en ce que** la chape (31,41) de chaque charnière (13,14) est en liaison hélicoïdale avec le sabot (32,42).

11. Porte d'aéronef selon la revendication 10, **caractérisée en ce que** la chape (31,41) de chaque charnière (13,14) comporte : une portion filetée tournante (33,44) montée dans un alésage taraudé du sabot (32,42) ; et une tête d'actionnement (34,45) accessible depuis le socle (20,21).

12. Porte d'aéronef selon l'une des revendications 9 à 11, **caractérisée en ce que** le sabot (32,42) de chaque charnière (13,14) est ajustable en translation selon une direction de deuxième translation (37,47) qui est orthogonale au troisième axe de pivotement (12) et à la direction de première translation (35,43).

13. Porte d'aéronef selon la revendication 12, **caractérisée en ce que** le sabot (32,42) est monté sur le socle (20,21) par l'intermédiaire :
- d'un arbre de guidage (30,48) s'étendant parallèlement à la direction de deuxième translation (37,47) ;
- d'une vis d'ajustement (39,49), s'étendant parallèlement à la direction de deuxième translation (37,47), qui est en liaison pivot avec le socle (20,21) et qui est en liaison hélicoïdale avec le sabot (32,42).

14. Porte d'aéronef selon l'une quelconque des revendications précédentes, **caractérisée en ce qu'**elle comporte une bielle de pivotement (16) et une avant-bielle de pivotement (19) reliées entre elles par une liaison pivot, et **en ce que** l'attache ajustable (23) de l'une (14) des charnières comporte un pivot (51) pour la bielle de pivotement (16).

15. Porte d'aéronef selon l'une quelconque des revendications précédentes, **caractérisée en ce qu'**elle comporte un mécanisme d'ouverture par échappement latéral, toutes les pièces reliant l'ouvrant (5) au cadre de porte (4) étant articulées uniquement par des liaisons pivot selon des axes parallèles au premier axe de pivotement (8).

## Patentansprüche

1. Luftfahrzeugtür, welche aufweist:
- ein Öffnungselement (5), das eine Türstruktur (17) umfasst, an welcher eine Außenwand (18) befestigt ist;
- eine Zarge, die einen Türrahmen (4) umfasst, der dazu bestimmt ist, am Rumpf (1) des Luftfahrzeugs befestigt zu werden;
- einen Stützarm (6) des Öffnungselements (5), der ein Ende aufweist, das schwenkbar am Türrahmen (4) angebracht ist, wobei dieser Stützarm (6) zwischen einer Schließposition, in welcher das Öffnungselement (5) den Türrahmen (4) verschließt, und einer Öffnungsposition, in welcher das Öffnungselement (5) von dem Türrahmen (4) gelöst ist, beweglich ist;
- wobei der Stützarm (6) mit einem Stützausleger (9) durch eine erste Schwenkverbindung (7) verbunden ist, die als einzigen Freiheitsgrad eine Drehung zwischen dem Stützausleger (9) und dem Stützarm (6) um eine erste Schwenkachse (8) ermöglicht, wobei der Stützausleger (9) mit dem Öffnungselement (5) durch eine zweite Schwenkverbindung (10) verbunden ist, die als einzigen Freiheitsgrad eine Drehung zwischen dem Öffnungselement (5) und dem Stützausleger (9) um eine zu der ersten Schwenkachse (8) parallele zweite Schwenkachse (11) ermöglicht;
- wobei der Stützarm (6) mit dem Türrahmen (4) durch zwei Scharniere (13, 14) verbunden ist, die jeweils einen Drehzapfen (26, 27) zur Drehung des Stützarmes (6) um eine dritte Schwenkachse (12), welche parallel zur ersten Schwenkachse (8) und zur zweiten Schwenkachse (11) ist, aufweisen;
wobei diese Luftfahrzeugtür **dadurch gekennzeichnet ist, dass**:
dieser Drehzapfen (26, 27) jedes Scharniers mit dem Türrahmen (4) durch ein Befestigungsstück (22, 23) verbunden ist, das in einer ersten Translationsrichtung (35, 43) und in einer zweiten Translationsrichtung (37, 47) translatorisch verstellbar ist, wobei diese zwei Richtungen (35, 37, 43, 47) orthogonal zueinander und orthogonal zu der dritten Schwenkachse (12) sind; und dadurch, dass die Drehzapfen (26, 27) des Stützarmes (6) entlang der dritten Schwenkachse (12) translatorisch verstellbar sind.

2. Luftfahrzeugtür nach Anspruch 1, **dadurch gekennzeichnet, dass** die zwei Scharniere (13, 14) am Stützarm (6) derart ausgerichtet sind, dass die Drehzapfen (26, 27) des Stützarmes (6) entlang der dritten Schwenkachse (12) ausgerichtet sind.

3. Luftfahrzeugtür nach einem der Ansprüche 1 oder 2, **dadurch gekennzeichnet, dass** der Drehzapfen (26) des Stützarmes (6) des einen (13) der Scharniere eine Gleitwelle (30) aufweist, mit welcher sich der Stützarm (6) in Gleitschwenkverbindung befindet; und dadurch, dass der Drehzapfen (27) des Stützarmes (6) des anderen Scharniers (14) mit dem Stützarm (6) durch eine auskuppelbare schraubenförmige Einstellverbindung verbunden ist.

4. Luftfahrzeugtür nach Anspruch 3, **dadurch gekennzeichnet, dass** der Drehzapfen (27) des Stützarmes (6) des anderen Scharniers (14) aufweist: eine zentrale Welle (52), die an dem verstellbaren Befestigungsstück (23) angebracht ist und sich entlang der dritten Schwenkachse (12) erstreckt; einen mit einem Gewinde versehenen Zylinder (53), der auf der zentralen Welle (52) drehbar gelagert ist; eine Gewindebuchse (55), die auf den mit einem Gewinde versehenen Zylinder (53) aufgeschraubt und an dem Stützarm (6) befestigt ist.

5. Luftfahrzeugtür nach Anspruch 4, **dadurch gekennzeichnet, dass** die Drehung des mit einem Gewinde versehenen Zylinders (53) durch einen lösbaren Flansch (57), der am Stützarm (6) zur Anlage kommt, gestoppt wird.

6. Luftfahrzeugtür nach einem der vorhergehenden Ansprüche, **dadurch gekennzeichnet, dass** die Scharniere (13, 14) jeweils einen Sockel (20, 21) aufweisen, der am Türrahmen (4) befestigt ist, wobei das verstellbare Befestigungsstück (22, 23) jedes Scharnies (13, 14) in dem entsprechenden Sockel (20, 21) angebracht ist.

7. Luftfahrzeugtür nach einem der vorhergehenden Ansprüche, **dadurch gekennzeichnet, dass** das verstellbare Befestigungsstück (22, 23) jedes Scharnies (13, 14) eine Wand des Türrahmens (4) durchquert.

8. Luftfahrzeugtür nach einem der Ansprüche 6 oder 7, **dadurch gekennzeichnet, dass** das verstellbare Befestigungsstück (22, 23) jedes Scharniers (13, 14) einen Schuh (32, 42), der in dem Sockel (20, 21) angebracht ist, und ein Gabelstück (31, 41), das den Schuh (32, 42) mit dem Drehzapfen (26, 27) des Stützarmes (6) verbindet, aufweist.

9. Luftfahrzeugtür nach Anspruch 8, **dadurch gekennzeichnet, dass** das Gabelstück (31, 41) jedes Scharniers (13, 14) in Bezug auf den Schuh (32, 42) in einer ersten Translationsrichtung (35, 43), welche orthogonal zur dritten Schwenkachse (12) ist und diese schneidet, translatorisch verstellbar ist.

10. Luftfahrzeugtür nach Anspruch 8, **dadurch gekennzeichnet, dass** sich das Gabelstück (31, 41) jedes Scharniers (13, 14) mit dem Schuh (32, 42) in einer schraubenförmigen Verbindung befindet.

11. Luftfahrzeugtür nach Anspruch 10, **dadurch gekennzeichnet, dass** das Gabelstück (31, 41) jedes Scharniers (13, 14) aufweist: einen drehbaren Gewindeabschnitt (33, 34), der in einer Gewindebohrung des Schuhs (32, 42) angebracht ist; und einen Betätigungskopf (34, 45), der von dem Sockel (20, 21) aus zugänglich ist.

12. Luftfahrzeugtür nach einem der Ansprüche 9 bis 11, **dadurch gekennzeichnet, dass** der Schuh (32, 42) jedes Scharniers (13, 14) in einer zweiten Translationsrichtung (37, 47), welche orthogonal zur dritten Schwenkachse (12) und zur ersten Translationsrichtung (35, 43) ist, translatorisch verstellbar ist.

13. Luftfahrzeugtür nach Anspruch 12, **dadurch gekennzeichnet, dass** der Schuh (32, 42) am Sockel (20, 21) angebracht ist durch:
- eine Führungswelle (30, 48), die sich parallel zur zweiten Translationsrichtung (37, 47) erstreckt;
- eine Einstellschraube (39, 49), die sich parallel zur zweiten Translationsrichtung (37, 47) erstreckt, die sich mit dem Sockel (20, 21) in Schwenkverbindung befindet und die sich mit dem Schuh (32, 42) in einer schraubenförmigen Verbindung befindet.

14. Luftfahrzeugtür nach einem der vorhergehenden Ansprüche, **dadurch gekennzeichnet, dass** sie eine Schwenkstange (16) und eine Vor-Schwenkstange (19) aufweist, die durch eine Schwenkverbindung miteinander verbunden sind, und dadurch, dass das verstellbare Befestigungsstück (23) des einen (14) der Scharniere einen Drehzapfen (51) für die Schwenkstange (16) aufweist.

15. Luftfahrzeugtür nach einem der vorhergehenden Ansprüche, **dadurch gekennzeichnet, dass** sie einen Mechanismus zur Öffnung durch eine seitliche Ausstellbewegung aufweist, wobei alle Teile, die das Öffnungselement (5) mit dem Türrahmen (4) verbinden, ausschließlich durch Schwenkverbindungen mit zur ersten Schwenkachse (8) parallelen Achsen angelenkt sind.

## Claims

1. An aircraft door having:
- a leaf (5) comprising a door structure (17) to which an external wall (18) is fixed;
- a surround comprising a door frame (4) intended to be fixed to the fuselage (1) of the aircraft;
- a support arm (6) of the leaf (5) having an end mounted pivotably on the door frame (4), this support arm (6) being movable between a closed position, in which the leaf (5) closes the door frame (4), and an open position, in which the leaf (5) is released from the door frame (4) ;
- the support arm (6) is connected to a support forearm (9) by a first pivot connection (7), permitting as sole degree of freedom a rotation between the support forearm (9) and the support arm (6) about a first pivot axis (8), the support forearm (9) being connected to the leaf (5) by a second pivot connection (10), permitting as sole degree of freedom a rotation between the leaf (5) and the support forearm (9) about a second pivot axis (11) parallel to the first pivot axis (8);
- the support arm (6) is connected to the door frame (4) by two hinges (13, 14), each of them having a pivot (26, 27) for rotation of the support arm (6) about a third pivot axis (12), which is parallel to the first pivot axis (8) and to the second pivot axis (11);
this aircraft door being **characterized in that** :
this pivot (26, 27) of each hinge is connected to the door frame (4) by a fastener (22, 23) that is adjustable in translation in a direction of first translation (35, 43) and in a direction of second translation (37, 47), these two directions (35, 37, 43, 47) being orthogonal to each other and orthogonal to the third pivot axis (12) ; and **in that** these rotation pivots (26, 27) of the support arm (6) are translationally adjustable along the third pivot axis (12).

2. The aircraft door as claimed in claim 1, **characterized in that** the two hinges (13, 14) are aligned on the support arm (16) in such a way that the rotation pivots (26, 27) of the support arm (6) are aligned along the third pivot axis (12).

3. The aircraft door as claimed in claims 1 or 2, **characterized in that**: the rotation pivot (26) of the support arm (6) of one (13) of the hinges has a sliding shaft (30) with which the support arm (6) is in sliding pivot connection; and **in that** the rotation pivot (27) of the support arm (6) of the other hinge (14) is connected to the support arm (6) by a disengageable helical adjustment connection.

4. The aircraft door as claimed in claim 3, **characterized in that** said rotation pivot (27) of the support arm (6) of the other hinge (14) has: a central shaft (52) mounted on the adjustable fastener (23) and extending along the third pivot axis (12); a threaded cylinder (53) mounted rotatably on the central shaft (52); an internally threaded sleeve (55) screwed onto the threaded cylinder (53) and fixed to the support arm (6).

5. The aircraft door as claimed in claim 4, **characterized in that** the threaded cylinder (53) is stopped in rotation by a removable flange (57) coming into abutment against the support arm (6).

6. The aircraft door as claimed in any one of the preceding claims, **characterized in that** the hinges (13, 14) each have a base (20, 21) fixed to the door frame (4), the adjustable fastener (22, 23) of each hinge (13, 14) being mounted in the corresponding base (20, 21).

7. The aircraft door as claimed in any one of the preceding claims, **characterized in that** the adjustable fastener (22, 23) of each hinge (13, 14) passes through a wall of the door frame (4).

8. The aircraft door as claimed in either of claims 6 and 7, **characterized in that** the adjustable fastener (22, 23) of each hinge (13, 14) has a shoe (32, 42) mounted in the base (20, 21), and a yoke (31, 41) connecting the shoe (32, 42) to the rotation pivot (26, 27) of the support arm (6).

9. The aircraft door as claimed in claim 8, **characterized in that** the yoke (31, 41) of each hinge (13, 14) is adjustable in translation with respect to the shoe (32, 42), in a direction of first translation (35, 43) which is orthogonal to and intersects the third pivot axis (12).

10. The aircraft door as claimed in claim 9, **characterized in that** the yoke (31, 41) of each hinge (13, 14) is in helical connection with the shoe (32, 42).

11. The aircraft door as claimed in claim 10, **characterized in that** the yoke (31, 41) of each hinge (13, 14) has: a rotating threaded portion (33, 44) mounted in a threaded bore of the shoe (32, 42); and an actuation head (34, 45) accessible from the base (20, 21) .

12. The aircraft door as claimed in one of claims 0 through 11, **characterized in that** the shoe (32, 42) of each hinge (13, 14) is adjustable in translation in a direction of second translation (37, 47) which is orthogonal to the third pivot axis (12) and to the direction of first translation (35, 43).

13. The aircraft door as claimed in claim 12, **characterized in that** the shoe (32, 42) is mounted on the base (20, 21) by way of:
- a guide shaft (30, 48) extending parallel to the direction of second translation (37, 47);
- an adjustment screw (39, 49), extending parallel to the direction of second translation (37, 47), which is in pivot connection with the base (20, 21) and which is in helical connection with the shoe (32, 42).

14. The aircraft door as claimed in any one of the preceding claims, **characterized in that** it has a pivoting link (16) and a pivoting front link (19) connected to each other by a pivot connection, and **in that** the adjustable fastener (23) of one (14) of the hinges has a pivot (51) for the pivoting link (16).

15. The aircraft door as claimed in any one of the preceding claims, **characterized in that** it has a mechanism of opening by lateral escape, all the parts connecting the leaf (5) to the door frame (4) being articulated solely by pivot connections along axes parallel to the first pivot axis (8).
